## Europäisches Patentamt
## European Patent Office
## Office européen des brevets

(19)

(11) Veröffentlichungsnummer: **0 065 092**
**B1**

(12) **EUROPÄISCHE PATENTSCHRIFT**

(45) Veröffentlichungstag der Patentschrift:
**23.01.85**

(21) Anmeldenummer: **82102373.6**

(22) Anmeldetag: **23.03.82**

(51) Int. Cl.⁴: **F 27 B 14/10,** B 22 D 41/00,
B 01 L 3/04, A 61 C 13/20

(54) **Schmelztiegel zur Aufnahme kleiner Mengen.**

---

(30) Priorität: **12.05.81 DE 3118750**

(43) Veröffentlichungstag der Anmeldung:
**24.11.82 Patentblatt 82/47**

(45) Bekanntmachung des Hinweises auf die Patenterteilung:
**23.01.85 Patentblatt 85/4**

(84) Benannte Vertragsstaaten:
**AT BE CH FR GB IT LI LU NL**

(56) Entgegenhaltungen:
**DE - A - 2 357 943**
**DE - A - 2 509 853**
**GB - A - 479 661**

(73) Patentinhaber: **Linn, Horst, Heinrich-Hertz-Platz 1,**
**D-8459 Hirschbach-1 (DE)**

(72) Erfinder: **Linn, Horst, Heinrich-Hertz-Platz 1,**
**D-8459 Hirschbach-1 (DE)**

(74) Vertreter: **LOUIS, PÖHLAU, LOHRENTZ & SEGETH,**
**Kesslerplatz 1, D-8500 Nürnberg (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft Schmelztiegel zur Aufnahme kleiner Mengen für zahntechnische und analytische Zwecke sowie die Probenvorbereitung für metallurgische Zwecke, mit im Bereich des oberen Randes angeordneten Ausgußöffnungen. Unter »kleinen Mengen« im Sinne der Erfindung sind dabei die üblicherweise im zahntechnischen Bereich sowie in Labors anfallenden Mengen zu verstehen, d. h. Mengen von höchstens 2 kg.

Aus der GB-A 479 661 ist ein Tiegel der eingangs genannten Art bekannt, der eine Ausgußöffnung oder zwei Ausgußöffnungen aufweist, die am oberen Rand des Tiegels diametral gegenüberliegend angeordnet sind. Ein derartiger bekannter Schmelztiegel ist nach der Abnutzung der einen Ausgußöffnung bzw. seiner beiden diametral gegenüberliegenden Ausgußöffnungen, wie sie nach längerem Gebrauch des Schmelztiegels unvermeidlich ist, nicht mehr nachbesserbar und muß infolgedessen insgesamt durch einen neuen Schmelztiegel ersetzt werden.

Aus der DE-A 2 357 943 ist eine Gußzentrifuge für die Dental-Gußtechnik bekannt, die einen Schmelztiegel mit einer Sammelrinne aufweist. Die Sammelrinne ist mit einer Anzahl Ausgußöffnungen versehen.

Auch bei diesem bekannten Schmelztiegel sind die Ausgußöffnungen direkt im Schmelztiegel ausgebildet, so daß nach der Abnutzung der Ausgußöffnungen, die in diesem Anwendungsfall alle gleichzeitig zum Einsatz gelangen können, der gesamte Schmelztiegel durch einen neuen Schmelztiegel ersetzt werden muß.

Derartige Schmelztiegel werden sehr häufig aus äußerst wertvollem Material, beispielsweise aus Edelmetallen, hergestellt. Bei einem Edelmetall-Tiegel, z. B. aus einer Platin-Gold-Legierung, wie er in der Analysentechnik bisweilen verwendet wird, können allein die Aufarbeitungskosten bis DM 1000,-- betragen, wobei der Tiegel nur ein Fassungsvermögen von ca. 10 cm³ besitzt.

Deshalb liegt der vorliegenden Erfindung die Aufgabe zugrunde, einen Schmelztiegel der eingangs genannten Art zu schaffen, bei dem nach längerem Gebrauch und der dadurch bedingten Abnutzung insbesondere der Ausgußöffnungen nicht der ganze Schmelztiegel durch einen neuen Schmelztiegel ersetzt zu werden braucht, so daß der Investitionsaufwand wesentlich reduziert ist.

Diese Aufgabe wird erfindungsgemäß dadurch gelöst, daß der Schmelztiegel aus einem die Schmelze aufnehmenden Unterteil und einem wenigstens eine Ausgußöffnung aufweisenden, separaten Ausgießring besteht, der das Unterteil entlang dessen oberem Öffnungsrand umgreift.

Bei einem derartigen Schmelztiegel erfolgt also eine Unterteilung in zwei Teile, nämlich das den eigentlichen Schmelztiegel bildende Unterteil sowie den Ausgießring, der gegenüber dem Unterteil beweglich ist. Es besteht dann die Möglichkeit, den Ausgießring gegenüber dem Unterteil zu verdrehen und so die Ausgußöffnung jeweils an eine Stelle zu verlegen, an der das Schmelztiegel-Unterteil noch ausreichende Wandstärke hat. Gleichzeitig wird bei einem derartigen Vorgehen auch die Möglichkeit geschaffen, bekannte, etwa eierbecherförmige Schmelztiegel, die bisher mit keiner Ausgußöffnung versehen waren, mit einer Ausgußöffnung auszustatten, was für gewisse Anwendungsgebiete günstig ist, da dann der Austritt der Schmelze an einer genau definierten Stelle erfolgt. Grundsätzlich wäre bei Vorhandensein eines getrennten Ausgießringes eine Ausgußöffnung ausreichend. Wenn der Ausgießring jedoch mehrere Ausgußöffnungen hat, trägt dies zu einer Erhöhung der Standzeit des Ausgießringes bei. Ein Vorteil der zweiteiligen Ausgestaltung des Schmelztiegels ist, neben den bereits erwähnten Vorzügen, noch eine Vereinfachung in der Herstellung, da es leichter ist, ein verhältnismäßig einfach gestaltetes Unterteil und getrennt hiervon den Ausgießring mit den Ausgußöffnungen zu fertigen. Gegebenenfalls wäre es bei Verwendung eines derartigen Schmelztiegels auch möglich, Unterteil und Ausgießring aus unterschiedlichen Materialien herzustellen, weil ja die Beanspruchung von Unterteil und Ausgießring unterschiedlich ist, nachdem die Schmelze mit dem Ausgießring nur während eines verhältnismäßig kurzen Zeitraumes, nämlich während des Gießens in Berührung kommt. Es sei außerdem noch darauf hingewiesen, daß die Standzeiten von zweiteiligen Schmelztiegeln gegenüber einteiligen Schmelztiegeln mit mehreren Ausgußöffnungen größer sein dürften, da sowohl aus Platzgründen als auch aus Gründen der Stabilität und der Herstellungskosten gewisse Grenzen in der Zahl der Ausgußöffnungen gesetzt sind. In der Praxis wird man kaum über die Zahl von acht Ausgußöffnungen hinausgehen können. Bei Verwendung eines getrennten Ausgießringes können dagegen mit ein und demselben Schmelztiegel-Unterteil beliebig viele Ringe verwendet werden.

Bei einer zweiteiligen Ausbildung des Schmelztiegels in der vorstehend erläuterten Weise erfolgt die Verbindung zwischen Unterteil und Ausgießring in einfacher Weise derart, daß das Unterteil entlang seines Öffnungsrandes einen nach außen vorstehenden, wenigstens teilweise umlaufenden Flansch aufweist, mittels dessen es an einem innenseitigen Gegenflansch oder an Aussparungen des Ausgießringes einhängbar ist.

Es ist auch günstig, wenn bei dem zweiteiligen Schmelztiegel Unterteil und Ausgießring so aneinander angepaßt sind, daß der Querschnitt der wenigstens einen Ausgußöffnung des Ausgießringes vollständig über dem oberen Öffnungsrand des Unterteiles angeordnet ist, d. h. der Querschnitt der Ausgußöffnungen nicht durch das in den Ausgießring eingehängte Unterteil verengt wird.

Bei rotationssymmetrischer Ausbildung des Tiegels geht man vorteilhafterweise derart vor, daß über dessen Umfang oder den des Ausgießringes verteilt wenigstens vier Ausgußöffnungen vorgesehen sind. Als Höchstzahl wird man in der Praxis kaum mehr als acht Ausgußöffnungen bei den vergleichsweise kleinen Schmelztiegeln vorsehen.

Um die thermische Belastung und auch die Probleme bei der Fertigung möglichst gering zu halten, ist es zweckmäßig, wenn die Ausgußöffnungen in gleichem Abstand voneinander angeordnet sind.

Eine Erleichterung bei der Verwendung der Schmelztiegel nach der Erfindung erreicht man dann, wenn sämtliche Ausgußöffnungen eines Tiegels oder eines Ausgießringes gleich ausgebildet sind, so daß es in den Gießanlagen keine Rolle spielt, welche Ausgußöffnung gerade zur Anwendung kommt.

Schließlich liegt es im Rahmen der Erfindung, daß die Ausgußöffnungen von tüllenartigen Rohransätzen gebildet sind, was für bestimmte Anwendungszwecke besonders vorteilhaft sein kann.

Es ist verständlich, daß nach der Erfindung ausgebildete Tiegel praktisch für sämtliche bisher bekannten Anwendungsgebiete verwendet werden können. Ein Einsatz ist in nahezu allen Kleingießanlagen möglich, unabhängig davon, ob ein Zentrifugalguß, Schleuderguß, Druckguß, Vakuumguß, Vakuum-Druckguß oder Kippguß erstellt werden soll. Auch die Beheizungsart des Schmelzgutes spielt keine Rolle. Es können die üblichen Beheizungen mittels Flamme, Induktionsströmen, Lichtbogen (Plasma), Elektronenstrahl, Laserstrahl oder auch eine direkte bzw. indirekte elektrische Widerstandsleitung verwendet werden. Weiterhin lassen sich die Tiegel nach der Erfindung aus allen üblichen Werkstoffen herstellen. Zur Anwendung gelangen können Keramik (mit oder ohne Faserzusatz), Glaskeramik, Metallkeramik, Quarz, Graphit, Kohle, Glasgraphit, aber auch Metall- bzw. Edelmetall-Legierungen, beispielsweise Platin, gegebenenfalls in Legierung mit Rh, Zr bzw. Au sowie Zirkon und Legierungen, Titan, Wolfram, Kupfer und Kupfer-Legierungen.

Ein bevorzugtes Ausführungsbeispiel eines Schmelztiegels gemäß der Erfindung wird nachstehend anhand der Zeichnung erläutert. Es zeigt

Fig. 1 teilweise im Schnitt einen zweiteiligen Schmelztiegel mit vier Ausgußöffnungen und

Fig. 2 eine Draufsicht zu Fig. 1.

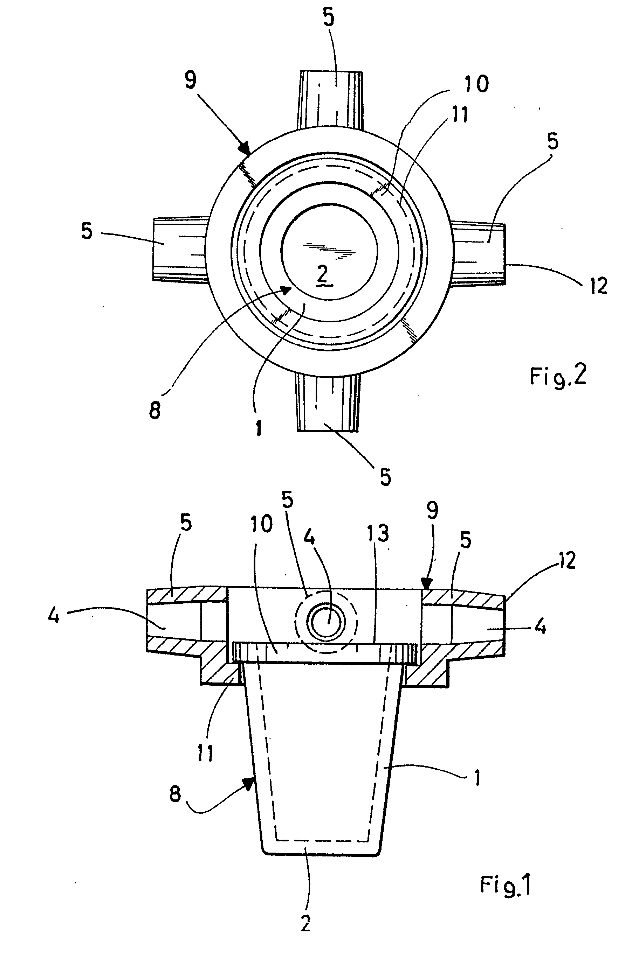

Nach den Fig. 1 und 2 besteht der Schmelztiegel aus zwei Teilen, nämlich einem Unterteil 8 und einem Gießring 9. Beim Unterteil 8 verjüngt sich der Mantel 1 konisch nach unten. Der Boden 2 ist eben. Das Unterteil 8 besitzt keine Ausgußöffnungen. Es ist vielmehr entlang seines oberen Öffnungsrandes mit einem nach außen abstehenden Flansch 10 versehen.

Der Flansch 10 des Unterteiles 8 liegt auf einem nach innen weisenden, umlaufenden Flansch 11 an der Unterseite des Gießringes 9 derart auf, daß das Unterteil 8 in dem Gießring 9 gehaltert ist. In den Fig. sind dabei umlaufende Flansche 10 bzw. 11 dargestellt. Es wäre selbstverständlich ohne weiteres möglich, eine andere Art der Festlegung des Unterteils 8 am Gießring 9 vorzusehen, z. B. mittels Nasen am Unterteil 8, die in entsprechende Aussparungen des Gießringes 9 eingreifen.

Der Gießring 9 weist bei dem Ausführungsbeispiel der Fig. 1 vier Ausgußöffnungen 4 auf, die von tüllenartigen Rohransätzen 5 gebildet sind, welche sich leicht nach außen zu, d. h. in Richtung auf ihre freie Außenkante 12, verjüngen. Eine derartige Ausbildung ist selbstverständlich nicht unbedingt erforderlich. Die Ausgußöffnungen im Gießring 9 können vielmehr jede geeignete Form und Ausbildung besitzen. Insbesondere wäre es auch denkbar, anstelle der tüllenartigen Rohransätze lediglich Rinnen oder sogar nur Kerben vorzusehen.

Wie Fig. 1 erkennen läßt, sind die Abmessungen vom Unterteil 8 und vom Ausgießring 9 so gewählt, daß der Querschnitt der Ausgußöffnungen 4 jeweils vollständig über dem oberen Öffnungsrand 13 des Unterteils 8 liegt. Dies wird durch entsprechende Wahl der Höhe des Flansches 10 und geeignete Anbringung des Flansches 11 an der Unterseite des Gießringes 9 erreicht.

Die Gestaltung von Unterteil 8 und Gießring 9 kann entsprechend den jeweiligen Anforderungen geändert werden. Auch kann die Anordnung und Zahl der Ausgußöffnungen 4 im Gießring 9, ebenso wie auch deren Ausbildung verändert werden. Besonders wesentlich ist es aber, daß Unterteil 8 und Gießring 9 gegebenenfalls auch aus unterschiedlichen Meterialien hergestellt werden können, wodurch sich sowohl die Lebensdauer als auch die Einsatzgebiete des Schmelztiegels von Fall zu Fall wesentlich erhöhen bzw. erweitern lassen.

**Patentansprüche**

1. Schmelztiegel zur Aufnahme kleiner Mengen für zahntechnische und analytische Zwecke sowie die Probenvorbereitung für metallurgische Zwecke, dadurch gekennzeichnet, daß er aus einem die Schmelze aufnehmenden Unterteil (8) und einem wenigstens eine Ausgußöffnung (4) aufweisenden, separaten Ausgießring (9) besteht, der das Unterteil entlang dessen oberen Öffnungsrand (13) umgreift.

2. Schmelztiegel nach Anspruch 1, dadurch gekennzeichnet, daß das Unterteil (8) entlang seines Öffnungsrandes (13) einen nach außen vorstehenden, wenigstens teilweise umlaufenden Flansch (10) aufweist, mittels dessen es an einem innenseitigen Gegenflansch (11) oder Aussparungen des Ausgießringes (9) einhängbar ist.

3. Schmelztiegel nach Anspruch 1 oder 2, dadurch gekennzeichnet, daß das Unterteil (8) und der Ausgießring (9) so aneinander angepaßt sind, daß der Querschnitt der wenigstens einen Ausgußöffnung (4) des Ausgießringes (9) vollständig über dem oberen Öffnungsrand (13) des Unterteiles angeordnet ist.

4. Schmelztiegel nach einem der vorhergehenden Ansprüche, dadurch gekennzeichnet, daß bei rotationssymmetrischer Ausbildung des Tiegels über den Umfang des Ausgießringes (9) verteilt wenigstens vier Ausgußöffnungen (4) vorgesehen sind.

5. Schmelztiegel nach einem der vorhergehenden Ansprüche, dadurch gekennzeichnet, daß die Ausgußöffnungen (4) in gleichem Winkelabstand voneinander angeordnet sind.

6. Schmelztiegel nach einem der vorhergehenden Ansprüche, dadurch gekennzeichnet, daß sämtliche Ausgußöffnungen (4) eines Ausgießringes (9) gleich ausgebildet sind.

7. Schmelztiegel nach einem der vorhergehenden Ansprüche, dadurch gekennzeichnet, daß die Ausgußöffnungen (4) von tüllenartigen Rohransätzen (5) gebildet sind.

## Claims

1. Melting crucible for accommodating small amounts for dental technology and analytical purposes and for the preparation of samples for metallurgical purposes, characterised in that it consists of a lower part (8) which accommodates the melt and a separate pouring ring (9), which has at least one pouring orifice (4) and which engages round the lower part along the upper orifice rim (13) of the latter.

2. Melting crucible according to claim 1, characterised in that the lower part (8) possesses, along its orifice rim (13) an outwardly projecting, at least partially peripheral flange (10), by means of which it can be suspended from an inner counter-flange (11), or from recesses of the pouring ring (9).

3. Melting crucible according to claim 1 or 2, characterised in that the lower part (8) and the pouring ring (9) are so matched to one another that the cross-section of at least one pouring orifice (4) of the pouring ring (9) is located entirely above the upper orifice rim (13) of the lower part.

4. Melting crucible according to one of the preceding claims, characterised in that if the crucible is of rotationally symmetrical construction there are provided at least four pouring orifices (14) distributed over the periphery of the puring ring (9).

5. Melting crucible according to one of the preceding claims, characterised in that the pouring orifices (4) are arranged at equal angular spacing from one another.

6. Melting crucible according to one of the preceding claims, characterised in that all the pouring orifices (4) of a pouring ring (9) are of identical construction.

7. Melting crucible according to one of the preceding claims, characterised in that the pouring orifices (4) are formed by spout-like rotor extensions (5).

## Revendications

1. Creuset de fusion pour petites quantités, dans des buts de technique dentaire et d'analyses ainsi que pour la préparation d'échantillons dans des buts métallurgiques, caractérisé en ce qu'il est constitué d'une partie inférieure (8) qui reçoit la masse fondue et d'une bague verseuse (9) séparée qui présente au moins un orifice de coulée (4) et qui entoure la partie inférieure le long du bord supérieur (13) de l'ouverture de cette dernière.

2. Creuset de fusion suivant la revendication 1, caractérisé en ce que la partie inférieure (8) présente, le long du bord (13) de son ouverture, une bride (10) au moins partiellement périphérique, qui fait saillie vers l'extérieur et au moyen de laquelle elle peut être suspendue à une contre-bride (11) située du côté interne de la bague verseuse (9) ou sur des évidements de celle-ci.

3. Creuset de fusion suivant l'une des revendications 1 et 2, caractérisé en ce que la partie inférieure (8) et la bague verseuse (9) sont adaptées l'une sur l'autre de façon que la section transversale d'au moins un orifice de coulée (4) de la bague verseuse (9) soit totalement agencée au-dessus du bord supérieur (13) de l'ouverture de la partie inférieure.

4. Creuset de fusion suivant l'une des revendications précédentes, caractérisé en ce que, dans une forme de réalisation du creuset présentant une symétrie de révolution, au moins quatre orifices de coulée (4) sont prévus de manière répartie sur la périphérie de la bague verseuse (9).

5. Creuset de fusion suivant l'une des revendications précédentes, caractérisé en ce que les orifices de coulée (4) sont agencés à une distance angulaire égale l'un de l'autre.

6. Creuset de fusion suivant l'une des revendications précédentes, caractérisé en ce que tous les orifices de coulée (4) d'une bague verseuse (9) sont réalisés de manière identique.

7. Creuset de fusion suivant l'une des revendications précédentes, caractérisé en ce que les orifices de coulée (4) sont formés par des ajutages (5) de type verseur.

Fig.2

Fig.1